# FASCICULE DE BREVET EUROPEEN

(11) **EP 1 964 710 B1**
(45) Date de publication et mention de la délivrance du brevet: **16.12.2009**
(21) Numéro de dépôt: 08003654.4
(22) Date de dépôt: 28.02.2008
(51) Int. Cl.: B60N 2/015

(54) **Système d'ancrage pour siège amovible de véhicule automobile**
Verankerungssystem für herausnehmbaren Sitz eines Kraftfahrzeugs
Anchoring system for a removable automotive vehicle seat

(30) Priorité: 02.03.2007 FR 0701546
(43) Date de publication de la demande: 03.09.2008
(73) Titulaire: GRUPO ANTOLIN-INGENIERIA, S.A., 09080 Burgos (ES)
(72) Inventeur: Duchateau, Jean, 43330 Pont Salomon (FR); Decombe, François, 42350 La Talaudiere (FR); Aissou, Nacer, 69340 Francheville (FR)
(74) Mandataire: Delorme, Nicolas

(56) Documents cités:
- DE-A1- 10 034 019
- FR-A1- 2 770 811
- US-A- 4 978 158

## Description

La présente invention concerne un système d'ancrage d'un siège amovible dans un plancher d'un véhicule.

Par siège, on entend de manière générale un siège individuel ou une banquette qui peut recevoir de un à trois passagers.

De nombreux véhicules automobiles actuels sont équipés de sièges amovibles. L'amovibilité d'un siège est réalisée par un ou plusieurs systèmes d'ancrage qui doivent permettre de fixer le siège dans le plancher du véhicule et qui doivent être déverrouillables pour permettre le retrait du siège du véhicule de façon à augmenter sa capacité de chargement.

Le système d'ancrage d'un siège amovible doit faire face à plusieurs contraintes, notamment :
- Il doit assurer la transmission vers le plancher des efforts subis par le siège et un éventuel passager, notamment, en cas de décélération brutale.
- il doit être exempt de bruits parasites et de jeux générateurs de bruit,
- il doit également être facile à manipuler dans ses opérations de mise en place dans le véhicule et de retrait du véhicule.

II. existe un point sur lequel les sièges de véhicule amovibles actuels ne sont pas entièrement satisfaisants.

En effet, sur les sièges amovibles actuels, il importe de positionner très précisément le ou les systèmes d'ancrage en regard de fenêtres d'ancrage correspondantes pratiquées dans le plancher du véhicule dans lesquelles les systèmes d'ancrage viennent se fixer.

Or, dans la mesure où un siège est un objet volumineux et lourd, le positionnement du siège par rapport à des fenêtres d'ancrage peut être extrêmement mal aisé.

Un positionnement incorrect peut induire un ancrage déficient du siège ce qui peut avoir comme conséquence un dégagement du siège en cas de forte décélération du véhicule. Un mauvais positionnement et un mauvais ancrage peuvent donc être très préjudiciables pour la sécurité du ou des passagers qui prendraient place sur un siège incorrectement ancré et/ou pour un ou des passages qui se situeraient en avant du siège incorrectement ancré dans le plancher du véhicule.

On connaît par le document DE 100 34 019 un mécanisme d'ancrage complexe présentant de nombreux composants. Ce mécanisme est notamment d'un encombrement important et les nombreux composants sont susceptibles de générer des bruits parasites.

L'invention, se propose de résoudre les inconvénients des sièges amovibles connus.

Dans un contexte technique, un but de l'invention est notamment de proposer un système d'ancrage pour un siège amovible de véhicule qui soit tolérant en terme de positionnement par rapport à un moyen de réception lié au plancher du véhicule.

Un autre but de l'invention est de proposer un système d'ancrage peu encombrant et qui ne soit pas générateur de bruits.

L'invention a pour objet un système d'ancrage pouvant être relié à un siège d'un véhicule destiné à assurer l'ancrage du siège sur des moyens de réception comprenant deux fils parallèles insérés dans un plancher du véhicule et délimitant une fenêtre d'ancrage; le système d'ancrage comprend (i) un premier verrou présentant une liaison pivot P1 le reliant de manière rotative au siège et un crochet déporté de la liaison pivot et (ii) un second verrou présentant une liaison pivot P2 le reliant de manière rotative au siège et un crochet déportée de la liaison pivot ; chaque verrou peut pivoter entre une position de verrouillage dans laquelle chaque verrou est engagé sur un fil au niveau de son crochet et une position de déverrouillage dans laquelle chaque verrou est dégagé de son fil respectif, caractérisé en ce que le système d'ancrage comprend en outre des moyens de rappel élastique, embarqués sur les premier et second verrous, sollicitant synchroniquement la rotation du premier et du second verrou vers leur position de verrouillage et des moyens de synchronisation, embarqués sur les premier et second verrous, de la rotation des verrous au cours de leur rotation vers leur position de déverrouillage.

L'un des points importants de l'invention réside dans la disposition selon laquelle les deux verrous qui permettent l'ancrage sont chacun mobile en rotation. Ainsi, chacun des verrous peut s'engager sur un fil selon un débattement angulaire qui lui est propre en fonction de sa position par rapport au fil. En d'autres termes, le système d'ancrage est très tolérant sur son positionnement par rapport à la fenêtre d'ancrage. Contrairement au système d'ancrage de l'art antérieur, le système d'ancrage selon l'invention ne comporte pas d'organes de verrouillage fixes qui exigent par le fait même un positionnement précis par à la fenêtre d'ancrage.

On peut noter de plus que le système d'ancrage selon l'invention est particulièrement compact puisque l'ensemble de ses composants est embarqué sur les deux verrous mobiles en rotation.

Les caractéristiques ci-après sont définies dans les revendications dépendantes.

Le système d'ancrage comprend un élément de centrage présentant une forme tronconique superposé aux verrous, disposé dans le prolongement de ceux-ci, et dépassant de ceux-ci.

La présence de l'élément de centrage permet, grâce à sa forme tronconique, de réaliser un auto centrage du système par rapport à la fenêtre d'ancrage.

Selon des dispositions concrètes, les moyens de rappel élastique comprennent un ressort hélicoïdal dont chaque extrémité présente un crochet qui vient se fixer sur un ergot situé sur chaque verrou à son extrémité opposée, par rapport à sa liaison pivot, à celle présentant un crochet.

Pour assurer la synchronisation de la rotation des verrous lors du déverrouillage, il peut être prévu que le premier verrou présente un pion faisant saillie positionné à distance de la liaison pivot P1 et que le second verrou présente un levier maintenu en appui contre le pion par les moyens de rappel élastique. Ainsi, il est crée une connexion mécanique entre les deux verrous qui fait qu'une action exercée sur le premier verrou pour le faire pivoter se traduit pour une rotation simultanée du second verrou.

Il peut être prévu que le pion soit relié à un organe d'actionnement permettant de transmettre au premier verrou un mouvement s'opposant aux moyens de rappel élastique.

De façon pratique, l'organe d'actionnement peut comprendre une tringle de commande disposée dans le prolongement du pion.

Le système d'ancrage peut présenter une platine possédant un premier axe sur lequel le premier verrou est engagé et un second axe sur lequel le second verrou est engagé, l'élément de centrage étant partie intégrante de la platine. Ceci fait du système d'ancrage un sous ensemble fonctionnel qui peut être aisément mis en place sur un siège.

De façon à assurer une fin de course lors du déverrouillage, le premier verrou peut présenter une surépaisseur annulaire qui ceinture la première liaison pivot P1 et le second verrou peut présenter une surface en arc de cercle qui vient s'appuyer contre la surépaisseur annulaire en position déverrouillée.

L'invention concerne également un siège amovible notamment pour véhicule automobile comprenant un piétement sur lequel est rapporté au moins un système d'ancrage présentant les caractéristiques précitées.

Dans un type de réalisation, le siège peut présenter deux pieds latéraux sur chacun desquels un système d'ancrage est rapporté,

Il peut être prévu qu'un axe s'étende transversalement au siège et relie les liaisons pivot de chacun du premier verrou.

Pour commander le déverrouillage, une tringle présentant un coude peut relier les pions de chaque système d'ancrage.

Pour sa bonne compréhension, l'invention est décrite en référence au dessin ci annexé représentant, à titre d'exemple non limitatif, une forme de réalisation d'un système d'ancrage selon l'invention équipant un siège amovible d'un véhicule automobile.
Figure 1 est une vue de face de ce système d'ancrage pris isolement d'un siège,
Figure 2 représente en perspective une vue partielle d'un siège équipé du système d'ancrage selon l'invention,
Figures 3 et 4 montrent le système d'ancrage allant vers sa position de verrouillage,
Figures 5 et 6 montrent le système d'ancrage au cours de d'une phase de déverrouillage.

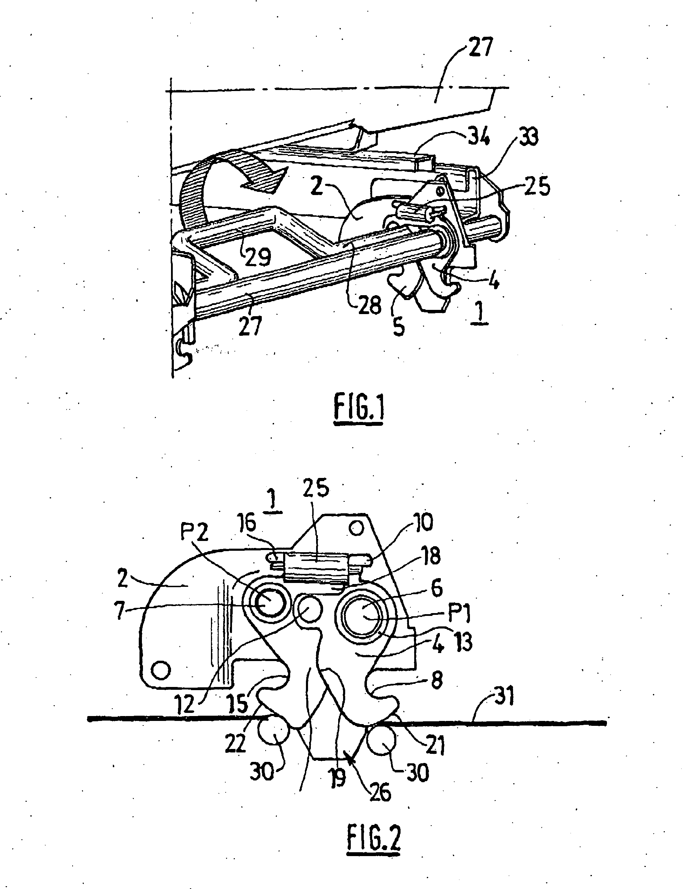

En se reportant tout d'abord à la figure 1, on peut voir que le système d'ancrage 1 présente une platine 2 qui peut être réalisée, par exemple, dans une tôle métallique emboutie.

La platine 2 assure la réception d'un premier verrou 4 et d'un second verrou 5. Les premier et second verrous 4 et 5 sont montés de manière pivotante sur la platine 1 grâce à des liaisons pivot respectivement référencées P1 et P2.

Les liaisons pivot P1 et P2 peuvent être réalisées par des ouvertures circulaires pratiquées dans la platine 2 dans lesquelles sont insérés des axes 6 et 7; le premier verrou 4 et le second verrou 5 vont donc pouvoir venir pivoter respectivement sur les deux axes 6 et 7.

Le premier verrou 4 qui est, de préférence, une pièce métallique présente une ouverture située sensiblement dans sa partie centrale dans laquelle l'axe 6 est engagé ; à l'une de ses extrémités, le premier verrou 4 présente un crochet 8 qui est donc déporté de l'axe de la liaison pivot P1 ; à sa seconde extrémité, c'est-à-dire à son extrémité opposée, par rapport à l'axe de la liaison P1, à celle présentant le crochet 8, le premier verrou 4 possède un ergot 10.

On note également que le premier crochet présente un pion 12 qui est situé à distance de l'axe de la liaison P1.

Une autre disposition présente sur le premier verrou 4 consiste en une surépaisseur annulaire 13 qui ceinture la liaison pivot P1; la fonction de la surépaisseur annulaire 13 apparaîtra plus loin.

Le second verrou 5 présente une structure générale sensiblement similaire à celle du premier verrou 4. En effet, le second verrou 5 possède une ouverture circulaire sensiblement au niveau de sa partie centrale dans laquelle est engagé l'axe 7 ; à l'une de ses extrémités, le second verrou 5 possède un crochet 15 tandis qu'à sa seconde extrémité, c'est-à-dire son extrémité opposée à celle du premier crochet par rapport à la liaison pivot P2, le second verrou est doté d'un ergot 16.

Le premier verrou 4 et le second verrou 5 ont également la caractéristique commune de présenter chacun, à leur extrémité prolongeant leur crochet respectif, une surface formant une rampe qui porte respectivement les références 21 et 22 pour chaque verrou.

Le second verrou 5 se distingue du premier verrou 4 essentiellement sur deux points.

On note, sur le second verrou 5, la présence d'un levier 18 et la présence d'une surface en arc de cercle 19. Le second verrou 5 est dépourvu de pion.

L'assemblage du premier verrou 4 et du second verrou 5 sur la platine 2 se fait grâce au premier axe 6 qui est engagé dans l'ouverture du premier verrou 4 et dans, l'ouverture pratiquée dans la platine 2 pour former la liaison P1 et grâce au second axe 7 qui est engagé dans l'ouverture du second verrou 5 et dans la seconde ouverture de la platine 2 pour former la liaison P2.

On note également que le pion 12 dont est pourvu le premier verrou 4 vient se placer en appui contre le levier 18 dont est pourvu le second verrou 5.

Le dispositif d'ancrage, comme le montre la figure 1, comprend également un ressort hélicoïdal 25 de traction dont les deux extrémités sont respectivement fixées sur l'ergot 10 et 16 dont chacun des verrous 4 et 5 est pourvu.

Ainsi, comme on peut le voir sur la figure 1, l'action du ressort hélicoïdal 25 se traduit par le fait que les extrémités des deux verrous qui sont munies d'un crochet 8 et 15 ont tendance à s'écarter l'une de l'autre.

La figure 1 fait apparaître une autre caractéristique du système d'ancrage selon l'invention qui prévoit que la platine 2 intègre un élément de centrage 26 qui est constitué par une extension de matière de la platine 2 de forme sensiblement tronconique ; l'élément de centrage 26 se superpose aux verrous 5 et 6 et dépasse de ceux-ci au niveau de leur extrémité supportant les crochets 8 et 15.

La figure 2 montre la manière avec laquelle le dispositif d'ancrage selon l'invention peut être intégré à un siège 27 d'un véhicule automobile.

Dans le cas du siège montré à la figure 2, il est envisagé que deux systèmes d'ancrage 1, qui se font face, soient rapportés sur deux profilés 33 en U appartenant au piétement du siège 27 dans chacun desquels circule une coulisse 34 qui elle-même supporte l'assise du siège.

Cette disposition est tout à fait indicative et le système d'ancrage 1 pourrait tout aussi bien équipé un siège qui ne possède pas de moyens de réglage de sa position longitudinale par rapport au véhicule ou encore le système d'ancrage pourrait équiper un siège en banquette, pour ne citer que ces deux types de sièges.

La figure 2 fait apparaître plusieurs dispositions avantageuses parmi lesquelles on peut citer le fait qu'un axe unique transversal 27 assure la liaison pivot P1 de chaque premier verrou 4 des deux systèmes d'ancrage qui se font face ; cette disposition contribue à renforcer la rigidité transversale du siège en plus d'assurer la liaison pivot des deux premiers verrous 4 de deux systèmes d'ancrage 1 qui se font face.

La figure 2 montre également le fait que les deux pions 12 appartenant aux deux systèmes d'ancrage 1 sont reliés par une tringle transversale 28 qui, en son centre, présente un coude 29 dont la fonction apparaîtra plus loin.

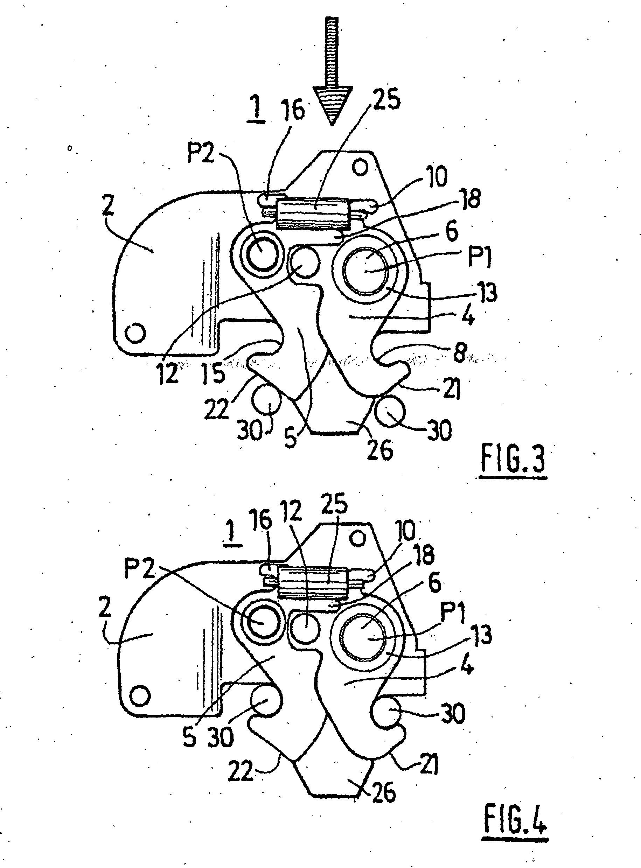

Le fonctionnement du système d'ancrage en phase de verrouillage sur le plancher d'un véhicule et en phase de déverrouillage de ce plancher de véhicule pour permettre l'amovibilité d'un siège est illustré plus particulièrement aux figures 3 à 6.

II est précisé tout d'abord que le plancher 31 du véhicule est équipé de deux fils métalliques 30 ayant un diamètre significatif, c'est-à-dire susceptibles de transmettre des efforts importants, sont disposés dans le plancher 31 de ce véhicule. Ces deux fils 30 sont orientés de manière transversale à la direction de déplacement du véhicule et sont parallèles, Le plancher 31 forme une discontinuité entre ces deux fils 30. Il existe ainsi une fenêtre délimitée par les deux fils 30.

En se reportant à la figure 3, il apparaît que, en plaçant un dispositif d'ancrage de manière approximative au dessus de la fenêtre d'ancrage délimitée par les deux fils, l'élément de centrage 26 qui présente une forme tronconique assure un guidage du siège auquel les systèmes d'ancrage sont liés de manière à ce que chacun des verrous 4 et 5 vienne se poser respectivement sur les deux fils 30.

Sous l'action même du poids du siège, et éventuellement grâce à une poussée supplémentaire exercée par l'utilisateur qui assure un positionnement grossier du siège, les deux verrous 4 et 5 s'effacent devant les deux fils 30, de telle sorte que chacun des crochets 8 et 15 du premier verrou 4 et du second verrou 5 sont engagés dans les deux fils 30.

Cette manoeuvre est facilitée par la présence des rampes 21 et 22 à l'extrémité des deux verrous 4 et 5.

On voit donc que le système d'ancrage 1 assure son auto centrage par rapport à la fenêtre d'ancrage délimitée par les deux fils 30, d'une part, grâce à l'élément de centrage 26 et, d'autre part, grâce à l'effacement simultané des deux verrous l'un vers l'autre.

Une fois que les crochets 8 et 15 de chacun des deux verrous 4 et 5 sont engagés dans les deux fils 30, le ressort 25 qui est un ressort de traction assure le maintien des deux verrous 4 et 5 dans la position verrouillée du siège.

On voit ainsi que du point de vue de l'utilisateur, l'opération d'ancrage d'un siège dans une fenêtre d'ancrage prévue dans le plancher d'un véhicule s'avère extrêmement simple.

L'opération de déverrouillage s'effectue par l'utilisateur qui vient exercer une traction sur le coude 29 prévue dans la tringle transversale 28. Le mouvement qui s'applique sur la tringle transversale 28 se traduit par un pivotement du premier verrou 4 autour de sa liaison pivot P1 qui le relie à la platine 2.

Simultanément, le second verrou 5 est également mis en rotation dans une rotation dont le sens est opposé à celle du premier verrou 4 grâce au fait que le pion 12 vient pousser sur le levier 18 dont le second verrou 5 est muni.

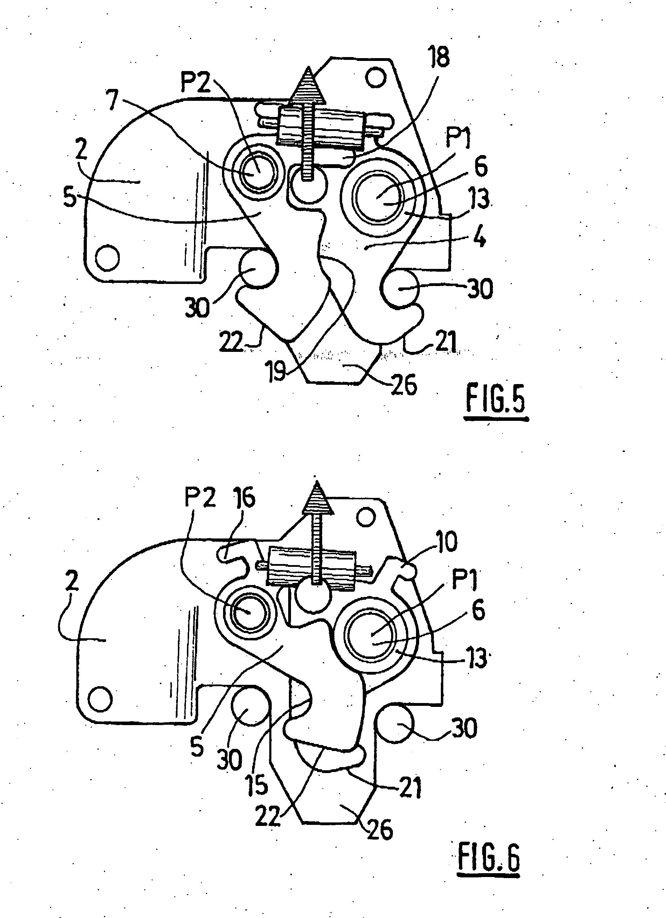

Ainsi, comme le montre la figure 6, en fin de course de la tringle 28, les deux verrous 4 et 5 sont chacun dégagés des fils 30.

La fin de course est réalisée lorsque la surface en arc de cercle 19, dont le second verrou 5 est muni, vient buter contre la surépaisseur annulaire 13 qui ceinture la liaison pivot P1,

L'invention fournit ainsi un dispositif d'ancrage qui est extrêmement tolérant en ce qui concerne son positionnement et son centrage par rapport un siège à proximité d'une fenêtre d'ancrage.

Le dispositif d'ancrage, grâce à ses facultés d'auto centrage, vient réaliser l'ancrage d'un siège sans que l'utilisateur n'ait à réaliser un positionnement précis qui est toujours incommode compte tenu du poids et de l'encombrement d'un siège.

Le dispositif d'ancrage selon l'invention est, en outre, particulièrement compact puisque les fonctions de rappel élastique (réalisées par le ressort 25 rattaché par les ergots 10, 16 des verrous 4, 5) et de synchronisation de rotation (réalisées par le pion 12 et le levier 18 porté par les verrous 4, 5) sont supportées par les verrous 4 et 5. Il en résulte donc un système peu encombrant et peu susceptible de générer des bruits parasites,

Bien entendu, l'invention n'est pas limitée à la forme de réalisation décrite à titre d'exemple non limitatif. Ainsi au lieu d'une tringle, il pourrait être envisagé de relier le premier verrou à une sangle sur laquelle un utilisateur pourrait exercer une traction.

## Revendications

1. Système d'ancrage (1) pouvant être relié à un siège (27) d'un véhicule et destiné à assurer l'ancrage du siège (27) sur des moyens de réception comprenant deux fils (30) parallèles insérés dans un plancher (31 du véhicule et délimitant une fenêtre d'ancrage comprenant un premier verrou (4) présentant une liaison pivot P1 le reliant de manière rotative au siège (27) et un crochet (8) déporté de la liaison pivot P1 et un second verrou (5) présentant une liaison pivot P2 le reliant de manière rotative au siège (27) et un crochet (15) déportée de la liaison pivot P2, chaque verrou (4,5) pouvant pivoter entre une position de verrouillage dans laquelle chaque verrou (4,5) est engagé sur un fil au niveau de son crochet et une position de déverrouillage dans laquelle chaque verrou est dégagé de son fil respectif, **caractérisé en ce que** le système d'ancrage comprend, en outre :
- des moyens de rappel élastique embarqués sur les premier et second verrous (4, 5) sollicitant synchroniquement la rotation du premier et du second verrou (4, 5) vers leur position de verrouillage,
- des moyens de synchronisation embarqués sur les premier et second verrous (4, 5) de la rotation des deux verrous (4, 5) au cours de leur rotation vers leur position de déverrouillage.

2. Système d'ancrage selon la revendication 1, **caractérisé en ce que** le système comprend un élément de centrage (26) présentant une forme tronconique, superposé aux verrous (4,5), disposé dans le prolongement de ceux-ci, et dépassant de ceux-ci.

3. Système d'ancrage selon la revendication 1 ou la revendication 2, **caractérisé en ce que** les moyens élastiques comprennent un ressort hélicoïdal (25) dont chaque extrémité présente un crochet qui vient se fixer sur un ergot (10,16) situé sur chaque verrou (4,5) à son extrémité opposée par rapport à sa liaison pivot P1. P2 à celle présentant un crochet (8,15).

4. Système d'ancrage selon l'une des revendications 1 à 3, **caractérisé en ce que** le premier verrou (4) présente un pion (12) faisant saillie positionné à distance de la liaison pivot et le second verrou (5) présente un levier (18) maintenu en appui contre le pion (12) par les moyens de rappel élastique.

5. Système d'ancrage selon la revendication 4, **caractérisé en ce que** le pion (12) est relié à un organe d'actionnement permettant de transmettre au premier verrou (4) un mouvement s'opposant aux moyens de rappel élastique.

6. Système d'ancrage selon la revendication 5, **caractérisé en ce que** l'organe d'actionnement comprend une tringle de commande disposé dans le prolongement du pion (12).

7. Système d'ancrage selon l'une des revendications 1 à 6, **caractérisé en ce qu'**il présente une platine (2) possédant un premier axe (6) sur lequel est le premier verrou (4) est engagé et un second axe (7) sur lequel le second verrou (5) est engagé, l'élément de centrage (26) étant partie intégrante de la platine (2).

8. Système d'ancrage selon l'une des revendications 1 à 7, **caractérisé en ce que** le premier verrou (4) présente une surépaisseur annulaire (13) qui ceinture la première liaison pivot P1 et le second verrou (5) présente une surface (19) en arc de cercle qui vient s'appuyer contre la surépaisseur annulaire (13) en position déverrouillée.

9. Siège amovible notamment pour véhicule automobile comprenant un piétement sur lequel est rapporté au moins un système d'ancrage selon l'une des revendications 1 à 8.

10. Siège amovible selon la revendication 9, **caractérisé en ce que** la siège présente deux pieds latéraux sur chacun desquels un système d'ancrage (1) est rapporté.

11. Siège amovible selon la revendication 10, **caractérisé en ce qu'**un axe (27) s'étend transversalement au siège et relie les liaisons pivot de chacun du premier verrou.

12. Siège selon la revendication 10 ou la revendication 11, **caractérisé en ce qu'**une tringle (28) présentant un coude (29) relie les pions (92) de chaque système d'ancrage.

## Claims

1. An anchoring system (1) which may be connected to a seat (27) of a vehicle and intended to ensure anchoring of the seat (27) on receiving means comprising two parallel wires (30) inserted in a floor (31) of the vehicle, and delimiting an anchoring window comprising a first lock (4) having a pivot connection P1 rotatably connecting it to the seat (27) and a remote hook (8) of the pivot connection P1 and a second lock (5) having a pivot connection P2 rotatably connecting it to the seat (27) and a remote hook (15) of the pivot connection P2, each lock (4, 5) being able to pivot between a locking position in which each lock (4, 5) is engaged on a wire at its hook and an unlocking position in which each lock is disengaged from its respective wire, **characterized in that** the anchoring system further comprises:
- elastic return means loaded on-board the first and second locks (4, 5) synchronically urging the rotation of the first and second locks (4, 5) towards their locking position,
- means loaded on-board the first and second locks (4, 5) for synchronizing the rotation of both locks (4, 5) during their rotation towards their unlocking position.

2. The anchoring system according to claim 1, **characterized in that** the system comprises a centering member (26) having a frusto-conical shape, superposed to the locks (4, 5), positioned in the extension of the latter and jutting out from the latter.

3. The anchoring system according to claim 1 or claim 2, **characterized in that** the elastic means comprise a coil spring (25), each end of which has a hook which will be attached onto a lug (10, 16) located on each lock (4, 5) at its end opposite, relatively to its pivot connection P1, P2, to the one having a hook (8, 15).

4. The anchoring system according to any of claims 1 to 3, **characterized in that** the first lock (4) has a protruding pin (12) positioned at a distance from the pivot connection and the second lock (5) has a lever (18) held pressed against the pin (12) by elastic return means.

5. The anchoring system according to claim 4, **characterized in that** the pin (12) is connected to an actuating member with which a movement opposed to the elastic return means is transmitted to the first lock (4).

6. The anchoring system according to claim 5, **characterized in that** the actuating member comprises a control rod positioned in the extension of the pin (12).

7. The anchoring system according to any of claims 1 to 6, **characterized in that** it has a plate (2) having a first axis (6) on which the first lock (4) is engaged and a second axis (7) on which the second lock (5) is engaged, the centering member (26) being an integral part of the plate (2).

8. The anchoring system according to any of claims 1 to 7, **characterized in that** the first lock (4) has an annular overthickness (13) which surrounds the first pivot connection P1 and the second lock (5) has a surface (19) as a circular arc which will be pressed against the annular overthickness (13) in the unlocked position.

9. A removable seat notably for a motor vehicle comprising a base on which is added at least one anchoring system according to any of claims 1 to 8.

10. The removable seat according to claim 9, **characterized in that** the seat has two side legs on each of which an anchoring system (1) is added.

11. The removable seat according to claim 10, **characterized in that** an axis (27) extends transversely to the seat and connects the pivot connections of each of the first lock.

12. The seat according to claim 10 or claim 11, **characterized in that** a rod (28) having a bend (29) connects the pins (12) of each anchoring system.

## Patentansprüche

1. Verankerungssystem (1), das mit einem Sitz (27) eines Fahrzeugs verbindbar ist und dazu bestimmt, die Verankerung des Sitzes (27) auf Aufnahmemitteln zu gewährleisten, zwei parallele Drähte (30) umfassend, die in einen Boden (31) des Fahrzeugs eingelassen sind und ein Verankerungsfenster begrenzen, das einen ersten Riegel (4) mit einer Drehzapfenverbindung P1 umfasst, die ihn drehend mit dem Sitz (27) verbindet und einen von der Drehzapfenverbindung P1 versetzten Haken (8) und einen zweiten Riegel (5) mit einer Drehzapfenverbindung P2, die ihn drehend mit dem Sitz (27) verbindet und einen von der Drehzapfenverbindung P2 versetzten Haken (15), wobei jeder Riegel (4, 5) zwischen einer Verriegelungsstellung, in der jeder Riegel (4, 5) auf einen Draht auf Ebene seines Hakens zugreift, und einer Entriegelungsstellung, in der jeder Haken von seinem jeweiligen Draht gelöst ist, drehbar ist, **dadurch gekennzeichnet, dass** das Verankerungssystem weiterhin umfasst:
- elastische Rückholmittel auf dem ersten und zweiten Riegel (4, 5), die die Drehbewegung des ersten und des zweiten Riegels (4, 5) in ihre Verriegelungsstellung synchron veranlassen,
- Synchronisationsmittel auf dem ersten und zweiten Riegel (4, 5) der Drehbewegung der zwei Riegel (4, 5) während ihrer Drehung in ihre Entriegelungsstellung.

2. Verankerungssystem nach Anspruch 1, **dadurch gekennzeichnet, dass** das System ein über den Riegeln (4, 5), in Verlängerung dieser angeordnetes Zentrierelement (26) umfasst, das die Form eines Kegelstumpfs aufweist und über diese hinausragt.

3. Verankerungssystem nach Anspruch 1 oder Anspruch 2, **dadurch gekennzeichnet, dass** die elastischen Mittel eine Schraubenfeder (25) mit einem Haken an jedem Ende umfassen, der sich auf einem Vorsprung (10, 16) fixiert, der sich auf jedem Riegel (4, 5) an seinem Ende befindet, das im Verhältnis zu seiner Drehzapfenverbindung P1, P2 dem Ende gegenüberliegt, das einen Haken (8, 15) aufweist.

4. Verankerungssystem nach einem der Ansprüche 1 bis 3, **dadurch gekennzeichnet, dass** der erste Riegel (4) einen hervorstehenden Stift (12) aufweist, der beabstandet von der Drehzapfenverbindung positioniert ist und der zweite Riegel (5) einen Hebel (18) aufweist, der von den elastischen Rückholmitteln abgestützt gegen den Stift (12) gehalten wird.

5. Verankerungssystem nach Anspruch 4, **dadurch gekennzeichnet, dass** der Stift (12) mit einem Betätigungsorgan verbunden ist, das es erlaubt, an den ersten Riegel (4) eine Bewegung entgegengesetzt zu den elastischen Rückholmitteln zu übertragen.

6. Verankerungssystem nach Anspruch 5, **dadurch gekennzeichnet, dass** das Betätigungsorgan ein Steuergestänge umfasst, das in Verlängerung des Stifts (12) angeordnet ist.

7. Verankerungssystem nach einem der Ansprüche 1 bis 6, **dadurch gekennzeichnet, dass** es eine Platte (2) aufweist, die eine erste Achse (6) besitzt, auf der der erste Riegel (4) eingreift und eine zweite Achse (7), auf der der zweite Riegel (5) eingreift, wobei das Zentrierelement (26) fester Bestandteil der Platte (2) ist.

8. Verankerungssystem nach einem der Ansprüche 1 bis 7, **dadurch gekennzeichnet, dass** der erste Riegel (4) eine ringförmige Verdickung (13) aufweist, die die ersten Drehzapfenverbindung P1 umschließt und der zweite Riegel (5) eine kreisbogenförmige Fläche (18) aufweist, die sich in entriegelter Stellung auf der ringförmigen Verdickung (13) abstützt.

9. Herausnehmbarer Sitz vor allem für ein Kraftfahrzeug, ein Gestell umfassend, auf dem mindestens ein Verankerungssystem nach einem der Ansprüche 1 bis 8 angebracht ist.

10. Herausnehmbarer Sitz nach Anspruch 9, **dadurch gekennzeichnet, dass** der Sitz zwei seitliche Füße umfasst, auf denen ein Verankerungssystem (1) angebracht ist.

11. Herausnehmbarer Sitz nach Anspruch 10, **dadurch gekennzeichnet, dass** sich eine Achse (27) quer zum Sitz erstreckt und die Drehzapfenverbindungen jedes ersten Riegels verbindet.

12. Herausnehmbarer Sitz nach Anspruch 10 oder Anspruch 11, **dadurch gekennzeichnet, dass** ein Gestänge (28), das eine Krümmung (29) aufweist, die Stifte (12) jedes Verankerungssystems verbindet.
